# EUROPÄISCHE PATENTSCHRIFT

(11) **EP 2 465 627 B1**
(45) Veröffentlichungstag und Bekanntmachung des Hinweises auf die Patenterteilung: **30.12.2020**
(21) Anmeldenummer: 11192661.4
(22) Anmeldetag: 08.12.2011
(51) Int. Cl.: B23B 51/04, B23B 31/107

(54) **Bohrwerkzeug**
Drilling tool
Outil de forage

(30) Priorität: 14.12.2010 DE 102010061214
(43) Veröffentlichungstag der Anmeldung: 20.06.2012
(73) Patentinhaber: DreBo Werkzeugfabrik GmbH, 88361 Altshausen (DE)
(72) Erfinder: Zürn, Alexander, 88361 Altshausen (DE); Stumpp, Martin, 88214 Ravensburg (DE)
(74) Vertreter: Splanemann

(56) Entgegenhaltungen:
- EP-A1- 0 732 164
- DE-A1- 2 913 501
- DE-A1- 3 113 688
- DE-A1- 3 930 250
- JP-U- 57 157 409

## Beschreibung

Die Erfindung betrifft ein Bohrwerkzeug mit einem Großbohrer, in welchem ein Zentrierbohrer axial beweglich geführt ist.

Ein derartiges Bohrwerkzeug kann als Kronenbohrer oder als Bohrkrone, aber auch als Fräskrone ausgebildet sein und bedarf häufig zum präzisen Setzen der erwünschten Bohr- oder Fräslöcher eines Zentrierbohrers. Der Zentrierbohrer erstreckt sich dann koaxial zu dem Großbohrer im Übrigen und ragt gegenüber den Hartmetallplatten des Kronenbohrers vor.

Bei dieser Lösung, die sich beispielsweise zum Setzen von kreiszylindrischen Ausnehmungen für die Aufnahme von Schaltern und Steckdosen in Stein, Beton und Ziegel oder beim Mauerdurchbruch durchgesetzt hat, ist der Zentrierbohrer an den Bohrfortschritt beteiligt und weist in an sich bekannter Weise eine Hartmetallplatte auf. Es ist seit langem bekannt, dass für die Drehmitnahme des Zentrierbohrers und Aufnahme in dem Großbohrer im Übrigen einen Standard-SDS-Plus-Schaft zu verwenden, der Drehmitnahmenuten und axial wirkende Führungsnuten kombiniert.

Eine derartige Lösung lässt sich beispielsweise aus der DE-U-85 21 577 ersehen. Bei dieser Lösung erstrecken sich zwei einander gegenüberliegende Gewindestifte in die Drehmitnahmenuten des Zentrierbohrers hinein; zusätzlich ist ein Rastkörper als Auszugssicherung vorgesehen.

Diese Lösung hat sich in der Baustellenpraxis nicht durchgesetzt. Der mit dem Setzen der erwünschten Bohrlöcher befasste Arbeiter lässt häufig den Zentrierbohrer dann einfach am Rastkörper einschnappen und kümmert sich nicht um die Position des oder der Gewindestifte. Der Zentrierbohrer ist in dieser Position bereits eingeschnappt und rutscht insofern nicht heraus, wenn der Arbeiter die Hammerbohrmaschine mit dem Zentrierbohrer nach unten hält. Nachdem der Rastkörper nicht für die Drehmitnahme bestimmt ist, dreht sich der Zentrierbohrer in dieser Position beim Bohren in seiner Aufnahme im Großbohrer, was zum raschen Verschleiß des Rastkörpers und des Zentrierbohrers an seinem Schaft führt.

Ferner bedarf es für die Einstellung der Gewindestifte einer gewissen Erfahrung und der genauen Beachtung der Arbeitsvorschriften, die auf Baustellen von den Arbeitern häufig nicht eingehalten werden. Die Gewindestifte müssen nämlich so weit wie möglich in die Drehmitnahmenuten eingeschraubt werden, jedoch nicht so, dass sie den Zentrierbohrer zangenartig blockleren. Hierdurch würden sie nämlich überlastet oder entweder brechen oder zumindest einem Verschleiß unterworfen sein. Es wurde auch beobachtet, dass die recht dünnen Gewindestifte durch das beträchtliche, auf sie ausgeübte Drehmoment an ihrem vorderen Ende kurzerhand abgeschoren werden, so dass der Zentrierbohrer sich in seiner Aufnahme wiederum frei drehen kann.

Die Nachteile der vorbekannten Lösung haben dazu geführt, dass Alternativlösungen in Betracht gezogen wurden. Es ist etwa 10 Jahre später vorgeschlagen worden, anstelle der beiden Stifte, die in einer gegenüberliegende Nuten des Zentrierbohrers hineinragen, den Zentrierbohrer mit einer Abflachung zu versehen, die der Drehmitnahme dienen soll, wozu sich ein an einer Klammer geführter Stift quer zu dem Zentrlerbohrer in einer entsprechenden Führung am Schaft des Großbohrers erstreckt. Diese Lösung führt zwar nicht zu einem Verschleiß des Zentrierbohrers. Es hat sich in der Praxis jedoch ebenfalls als nachteilig erwiesen, denn überraschend brachen bei dieser Ausgestaltung häufig die Großbohrer selbst, vermutlich aufgrund der Schwächung an der Schaftwurzel durch die Durchtrittsausnehmung zur Aufnahme des Stiftes.

In der EP 0 732 164 A1 wird anstelle eines Sicherungsstiftes eine Art Splint beschrieben, welcher sich im Wesentlichen tangential entlang einer Nut in dem zu sichernden Zentrierbohrer erstrecken und durch Federringe oder Spiralfedern an seiner Position gegen unbeabsichtigtes Herausfallen gesichert werden soll. Da allerdings zum Einsetzen des Splintes eine Durchgangsbohrung durch den Schaft des Großbohrers nötig ist, wird durch diese Bohrung die Standfestigkeit des Großbohrers stark geschwächt,

In der JP 57 157 409 U wird ein Bohrwerkzeug mit den Merkmalen des Oberbegriffs des unabhängigen Anspruchs 1 offenbart. In diesem Dokument wird beschrieben, wie ein Zentrierbohrer mit einer radial verlaufenden Schraube (die mit einer Gegenmutter gegen Lockerung arretiert werden muss) befestigt werden kann. Der Schraube gegenüber liegt eine weitere ebenfalls radial verlaufende Madenschraube, welche zusammen mit einer Sprialfeder und einer an dem Schaft des Zentrierbohrers anliegenden in einem Sackloch aufgenommenen Kugel eine einrastende Verbindung des Zentrierbohrers bereitstellen soll.

Durch die zusätzlich nötige Sicherung der Madenschraube durch eine Kontermutter wird die Bedienung jedoch deutlich erschwert und das Risiko einer nicht ausreichenden Arretierung der Madenschraube erhöht. Außerdem birgt die Kugelrastung die Gefahr, dass der Bediener in dem Glauben gelassen wird, dass durch das spürbare Einrasten des Zentrierbohrers dieser schon ausreichend befestigt sein würde. Zudem wird augrund der durch die SDS-Schnellspannaufnahme für den Zentralbohrer vorgegebene Längsnut auf der einen Seite des Schaftes und das zusätzlich auf der gegenüberliegenden Seite vorhandene Sackloch der Durchmesser des Schaftes des Zentrlerbohrers sehr stark verringert, was wiederum zu einer Verschlechterung der Standfestigkeit des Bohrers führt.

Daher liegt der Erfindung die Aufgabe zu Grunde, ein Bohrwerkzeug gemäß dem Oberbegriff von Anspruch 1 zu schaffen, das bruchsicher und verschleißfest einem Großbohrer dauerhaft einen guten Bohrfortschritt ermöglicht.

Diese Aufgabe wird erfindungsgemäß durch Anspruch 1 gelöst. Vorteilhafte Weiterbildungen ergeben sich aus den Unteransprüchen.

Überraschend lässt sich durch die erfindungsgemäßen Maßnahmen eine sichere Lagerung des Zentrierbohrers In einen von einer Hammerbohrmaschine angetriebenen Großbohrer realisieren. Als Zentrierbohrer lässt sich auch ohne Weiteres ein SDS-Bohrer einsetzen, der standardmäßig und preisgünstig erhältlich ist, aber besonders bevorzugt einen Zentrierbohrer mit einer besonderen Nut, die einen flachen Nutengrund aufweist und in axialer Richtung je in Ausrundungen endet. In diese Nut greift erfindungsgemäß ein besonderer Stift ein, der an einem Befestigungskörper gelagert ist, dessen Quererstreckung deutlich größer als der Stift ist, mindestens teilweise deutlich größer. Unter deutlich größer

ist beispielsweise der doppelte Durchmesser zu verstehen, wenn sowohl Stift als auch Befestigungskörper kreisrund ausgebildet sind.

Überraschend ergibt sich durch die Kombination des Befestigungskörpers mit dem Stift einerseits eine verschleißfreie Drehmitnahme und sichere Führung und andererseits eine Bedienungssicherheit, die verhindert, dass durch Fehlbedienung ein vorzeitiger Verschleiß entsteht.

In vorteilhafter Ausgestalltung der Erfindung weist der Befestigungskörper ein Außengewinde auf, das mit einem Innengewinde des Großbohrers zusammen wirkt. Die insofern gebildete Schraube ist günstigerweise selbsthemmend, so dass ihre axiale Position fixiert ist. Vorteilhafterweise ergibt sich zudem ein Anschlag für die axiale Tiefe des Befestigungskörpers, und zwar durch das Zusammenwirken der Anlagefläche mit der Gegenanlagefläche.

Erfindungsgemäß wird bewusst auf zusätzliche Rastkörper verzichtet, die die Illusion eines ausreichend montierten Zentrierbohrers erzeugen könnten.

Der Befestigungskörper ist mit einer Konusfläche ausgestaltet, die als Anlagefläche gegenüber einer Gegenanlagefläche in dem Großbohrer dient. Die Anordnung kann in einer Durchtrittsausnehmung entweder am Schaft, an dem Großbohrer selbst oder an einem Übergang zwischen diesen bereitgestellt werden. Überraschend bricht der Großbohrer erfindungsgemäß an dieser Stelle nicht, was vermutlich auf die lediglich einseitige Erstellung einer Durchtrittsausnehmung zurückzuführen ist, so dass die teuren Wiederbeschaffungskosten entfallen.

Erfindungsgemäß ist es auch günstig, dass die Anlagefläche sich bis zum Stift hin erstreckt. Das auf dem Befestigungskörper ausgeübte Moment, also die seitliche Belastung, ist dann vergleichsweise gering. Zusätzlich ist die Führung durch die Flächenvergrößerung an der Anlagefläche und der Gegenanlagefläche verringert, so dass der Großbohrer selbst durch die Wechsellast für die Drehmitnahme des Zentrierbohrers nur sehr geringen Beanspruchungen ausgesetzt ist.

Besonders günstig ist auch die konische Ausgestaltung der Anlagefläche und entsprechend die konische Ausgestaltung der Gegenanlagefläche. Durch Wahl des Konuswinkels ist eine Selbsthemmung erzielbar, die verhindert, dass sich der durch die Zentrifugalkräfte radial nach auswärts beanspruchte Stift und Befestigungskörper löst.

Bevorzugt weist der Befestigungskörper an einer gegenüber der Anlagefläche weiter radial auswärts angeordneten Stelle ein Außengewinde auf, das in einem entsprechend passenden Innengewinde in der Durchtrittsausnehmung des Großbohrers geführt ist. In eingeschraubtem Zustand, also wenn die Anlagefläche einen Anschlag zur Gegenanlagefläche hin bildet, erstreckt sich dann der Befestigungskörper plan oder wenig nach außen überstehend gegenüber einem Schaft des Großbohrers.

Es versteht sich, dass für die Drehmitnahme des Befestigungskörpers selbst beim Einschrauben beliebige geeignete Kraftübertragungsflächen vorgesehen sein können. Beispielsweise kann der Befestigungskörper im Bereich seines Innengewindes einen Innensechskant aufweisen, der mit einem Inbusschlüssel zum Einschrauben des Befestigungskörpers betätigbar ist. Anstelle des Sechskants in an sich bekannter Weise auch ein Vierkant oder ein Torx-Mitnahmeprofil eingesetzt werden, wobei es sich versteht, dass im Grunde auch ein Kreuzschlitz-Mitnahmeprofil oder ein beliebiges anderes geeignetes Drehmitnahmeprofil am Gewindekopf des Befestigungskörpers realisierbar ist, ohne den Bereich der Erfindung zu verlassen.

Durch die Anordnung des Außengewindes an der gegenüber dem Stift gegenüberliegenden Seite lässt sich ohne Weiteres ein Außengewinde mit einem vergleichsweise großen Durchmesser realisieren, was dem Befestigungskörper einen harmonischen Grundaufbau gibt und insbesondere eine nahe Nachbarschaft der Anlagefläche zu Stift selbst.

Der vorgesehene Absatz als Durchmessersprung zum Stift einerseits und der Anlagefläche andererseits erlaubt die gewünschte großflächige Anlage des Befestigungskörpers in dem Großbohrer, ohne dass der Zentrierbohrer durch eine übergroße Nut nicht mehr funktionsfähig wäre.

Die Breite der Nut des Zentrierbohrers und damit der Stiftdurchmesser, der der Nutbreite entspricht und eine spielarme Lagerung des Stifts in der Nut ermöglicht, lässt sich in weiteren Bereichen an die Erfordernisse anpassen.

Die Breite der Nut kann beispielsweise 30 % bis 55 %, bevorzugt etwa 40 % bis 45 % des Durchmessers des Zentrierbohrers betragen. Bei diesem Dimensionsverhältnis steht auch dann noch genug "Fleisch" im Bereich des Schafts des Zentrierbohrers seitlich der Nut zur Verfügung, wenn dort durch die Drehmitnahme des Zentrierbohrers an dem Stift ein gewisser Verschleiß eingetreten ist.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: eine schematische Ansicht eines erfindungsgemäßen Bohrwerkzeugs in einer teilweise aufgebrochenen Seitenansicht; und
- Fig. 2: eine vergrößerte Darstellung des Ausschnitts X aus Fig. 1.

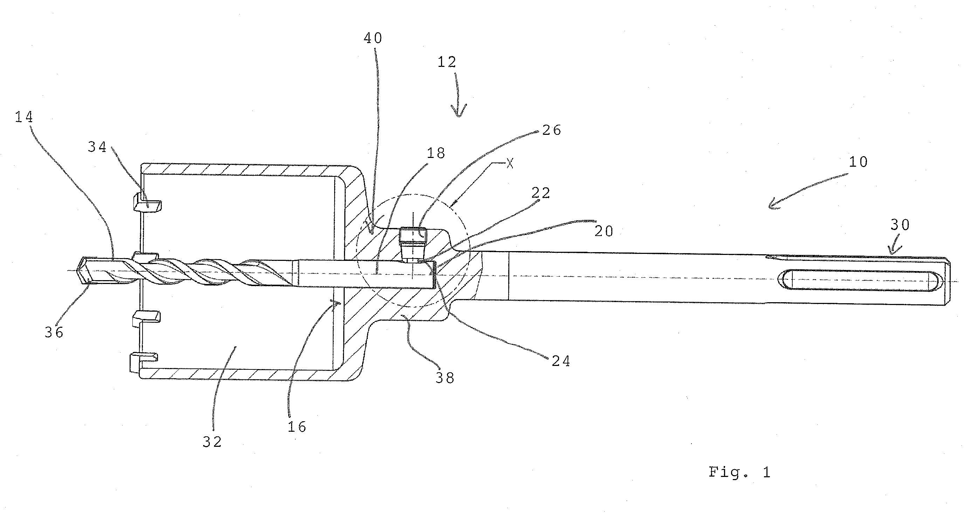

Das in Fig. 1 dargestellte Bohrwerkzeug 10 weist einen Großbohrer 12 auf, in dem ein Zentrierbohrer 14 axial beweglich geführt ist. Hierzu weist der Großbohrer 12 eine Sacklochbohrung 16 auf, in die ein Schaft 18 des Zentrierbohrers hineinragt.

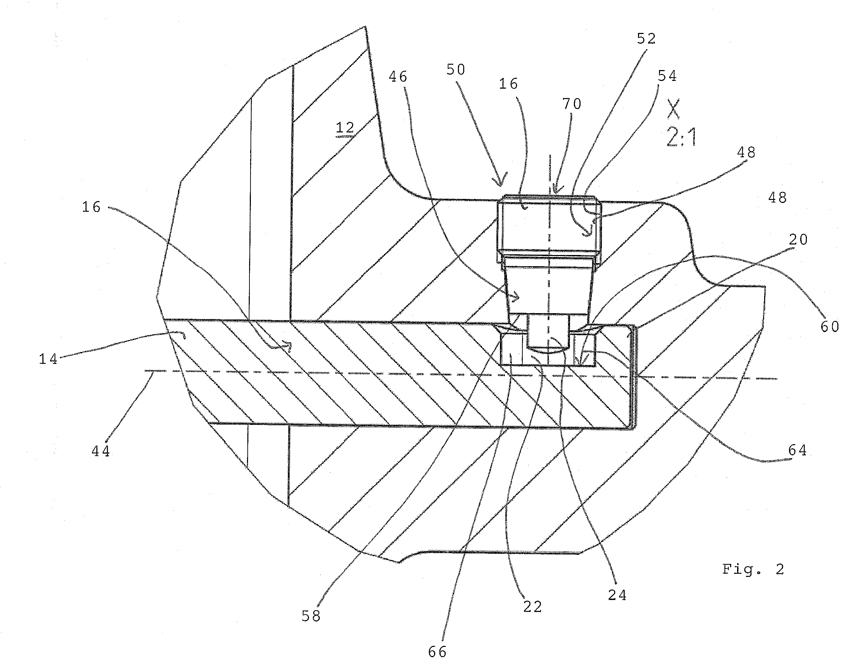

Der Schaft 18 weist in der Nähe seines hinteren Endes 20, jedoch von diesem mindestens 1 mm beabstandet, eine Nut 22 auf, die einen Stift 24 aufnimmt, der an einem Befestigungskörper 26 radial einwärts vorspringend ausgebildet ist. Der Befestigungskörper ist drehfest in dem Großbohrer 12 aufgenommen, und seine Ausgestaltung im Einzelnen wird anhand von Fig. 2 beschrieben.

Der Großbohrer 12 im Übrigen weist einen SDS-max-Schaft 30 auf, wobei sich versteht, dass auch eine beliebige andere Schaftausgestaltung zum Einsatz gelangen kann. Der Großbohrer 12 ist in dem dargestellten Ausführungsbeispiel als Kronenbohrer ausgebildet. Hierzu weist er in an sich bekannter Weise einen einseitig offenen Hohlzylinder 32 auf, der an seiner Vorderseite mit über den Umfang verteilten Hartmetallplatten 34 bestückt ist. Die Hartmetallplatten 34 werden von dem Zentrierbohrer 14 deutlich überragt, wobei der Zentrierbohrer 14 in ebenfalls an sich bekannter Weise ebenfalls mit einer Hartmetallplatte 36 ausgestattet ist.

Der Befestigungskörper 26 ist in dem dargestellten Ausführungsbeispiel am verdickten Schaftbereich 38 des Großbohrers 12 angeordnet. Es versteht sich, dass anstelle dessen auch eine Anordnung am Übergang 40 oder an einer beliebigen geeigneten anderen Stelle des Großbohrers 12 möglich ist.

Aus Fig. 2 ist die erfindungsgemäße Ausgestaltung des Befestigungskörpers 26 im Einzelnen ersichtlich. Der Befestigungskörper 26 ist einstückig ausgebildet und weist drei Abschnitte auf, nämlich, - von der Bohrer-Achse 44 aus betrachtet - den Stift 24, eine Ablagefläche 46 und ein Außengewinde 48. Der Stift 24 springt in das Sackloch 16 in den Großbohrer 12 vor, während die Anlagefläche 46 und das Außengewinde 48 in einer Durchtrittsausnehmung 50 für die Aufnahme des Befestigungskörpers in den Großbohrer 12 aufgenommen sind.

Hierzu weist die Durchtrittsausnehmung 50 eine Gegenanlagefläche 52 auf. Die Gegenanlagefläche 52 und die Anlagefläche 56 erstrecken sich konisch mit einem Konuswinkel, der selbsthemmend den Befestigungskörper 26 in der Durchtrittsausnehmung 50 hält. Dort erfolgt eine Drehmitnahme-Kraftübertragung, aber auch eine axiale Kraftübertragung zwischen dem Befestigungskörper 26 einerseits und dem Großbohrer 12 im Übrigen andererseits.

An der von dem Stift 24 abgewandten Seite der Anlagefläche 46 ist das Außengewinde 46 ausgebildet, dessen Durchmesser etwas größer als der Durchmesser der Anlagefläche 46 ist. Es passt zu einem Innengewinde 54 in der Durchtrittsausnehmung 50.

Am Übergang zwischen dem Stift 24 und der konusförmigen Anlagefläche 46 ist eine Kreisringfläche 58 ausgebildet, die einen Durchmessersprung zwischen der Anlagefläche 46 und dem Stift 24 bewirkt. Die Kreisringfläche 58 weist mit ihrer Flächenormalen zur Achse 46 hin und ist um weniges beabstandet von dem Zentrierbohrer 14. Diese Ausgestaltung bewirkt, dass die axiale Anlage für das Einschrauben des Befestigungskörpers 26 nicht an dieser Kreisringfläche 58 und auch nicht über den Kontakt zwischen dem Stift 24 und einem Nutengrund 60 der Nut 22 realisiert ist, sondern über die Anlage zwischen der Anlagefläche 46 und der Gegenanlagefläche 52.

Die radiale Position des Befestigungskörpers 26 in der Durchtrittsausnehmung 50 ist hierdurch bedienungssicher fixiert und die exakte Position des Stifts 24 bezogen auf die Nut 22 ist so festgelegt.

Die Nut 22 endet in Ausrundungen 64 und 66, die sich halbkreisförmig erstrecken, und zwar mit einem Durchmesser, der im Wesentlichen dem Durchmesser des Stifts 24 entspricht. Der Stift 24 weist im dargestellten Ausführungsbeispiel ein Längen-Durchmesserverhältnis von eins zu eins auf. Während die Nut 22 im dargestellten Ausführungsbeispiel als Flachnut ausgebildet ist, versteht es sich, dass anstelle einer Flachnut auch eine beliebige andere Ausgestaltung, beispielsweise als Rundnut, Trapeznut oder Zylindernut, oder aber auch als V-Nut in Betracht kommt. Auch muss der Stift 24 nicht zylindrisch ausgebildet sein, sondern kann eine beliebige runde, eckige, oder auch konische Form aufweisen, wobei es bevorzugt ist, dass die Erstreckung der Seitenflanken der Nut 22 und der Außenflächen des Stifts 24 zueinander passend gewählt sind.

Erfindungsgemäß günstig ist eine lösbare, aber sicher Lagerung des Befestigungskörpers 26 in dem Großbohrer 12 im Übrigen. Hierzu ist ein nicht dargestelltes Mitnahmeprofil für die Schraubbetätigung an der beiliegenden Außenseite 70 des Befestigungskörpers 26 vorgesehen, beispielsweise ein Innensechskant.

## Patentansprüche

1. Bohrwerkzeug (10), mit einem Großbohrer (12), Insbesondere einem Kronenbohrer, in welchem ein Zentrlerbohrer (14) axial beweglich geführt ist, wobei die Axialbewegung des Zentrlerbohrers (14) relativ zum Großbohrer (12) von mindestens einem Anschlag begrenzt Ist, wobei mindestens ein Stift (24), der an dem Großbohrer (12), seinem Schaft (38) oder einem Übergang (40) zwischen diesen gelagert Ist, sich, in der axialen Richtung des Stiftes (24) zum Zentrierbohrer (14) hin erstreckt, wobei
der Stift (24) an einem Befestigungskörper (26) von diesem in radialer Richtung des Bohrwerkzeugs (10) einwärts vorspringend ausgebildet Ist, **dadurch gekennzeichnet, dass** der Befestigungskörper (26) eine Anlagefläche (46) aufweist, die an einer Gegenanlagefläche (52) des Bohrwerkzeugs (10) anliegt und die Insbesondere mindestens teilweise eine größere Quererstreckung als der Stift (24) hat, und
die Anlagefläche (46) als Konusfläche ausgebildet Ist, die sich selbsthemmend mit einem Konuswinkel zum Stift (24) hin erstreckt, der geringer als 15 Grad und größer als 0,5 Grad ist und insbesondere 2 bis 8 Grad beträgt.

2. Bohrwerkzeug nach Anspruch 1, **dadurch gekennzeichnet, dass** der Stift (24) in dem Großbohrer (12), seinem Schaft (18) oder einem Übergang zwischen diesen befestigt ist und in eine Ausnehmung, insbesondere eine Nut (22), des Zentrierbohrers (14) zu dessen Drehmitnahme hineinragt.

3. Bohrwerkzeug nach einem der vorhergehenden Ansprüche, **dadurch gekennzeichnet, dass** sowohl der Stift (24) als auch die Anlagefläche (46) kreisrund ausgebildet ist und die Anlagefläche in den Stift übergeht und die Quererstreckung den Durchmesser der Anlagefläche bildet.

4. Bohrwerkzeug nach einem der vorhergehenden Ansprüche, **dadurch gekennzeichnet, dass** der Übergang zwischen dem Stift (24) und der Anlagefläche (46) an einem Absatz ausgebildet ist, der insbesondere eine Kreisringfläche (58) bildet, deren Flächennormale - bezogen auf den Großbohrer (12) - radial einwärts weist.

5. Bohrwerkzeug nach einem der vorhergehenden Ansprüche, **dadurch gekennzeichnet, dass** der Durchmesser der Anlagefläche (46) an ihrer kleinsten Stelle mindestens eineinhalb mal so groß wie der Durchmesser des Stiftes (24) ist, insbesondere weniger als 4 mal und besonders bevorzugt etwa doppelt so groß ist.

6. Bohrwerkzeug nach einem der vorhergehenden Ansprüche, **dadurch gekennzeichnet, dass** der Befestigungskörper (26) ein Außengewinde (46) aufweist, das an der dem Stift (24) gegenüberliegenden Seite der Anlagefläche angeordnet ist und einen gegenüber der Anlagefläche gleichen oder insbesondere größeren Durchmesser aufweist und in ein Innengewinde (54) des Bohrwerkzeugs (10) eingreift.

7. Bohrwerkzeug nach einem der vorhergehenden Ansprüche, **dadurch gekennzeichnet, dass** der Befestigungskörper (26) aus der Abfolge Stift - Anlagefläche - Gewinde mit zunehmendem Durchmesser gebildet ist, wobei die axiale Länge von Gewinde und Anlagefläche (46) im Wesentlichen gleich groß ist und insbesondere 20 % bis 100 %, bevorzugt etwa 50 %, größer als die axiale Länge des Stiftes.

8. Bohrwerkzeug nach einem der vorhergehenden Ansprüche, **dadurch gekennzeichnet, dass** in dem Zentrierbohrer (14) des Bohrwerkzeugs (10) eine Nut (22) ausgebildet ist, die sich im Wesentlichen achsparallel erstreckt und insbesondere je halbkreisförmig endet, und dass eine Drehmitnahmefläche an einer Nutenflanke ausbildet ist.

9. Bohrwerkzeug nach Anspruch 8, **dadurch gekennzeichnet, dass** die Nut (22) einen flachen Nutengrund aufweist, welche Nut (22) sich im Bereich zwischen der Achse (44) des Zentrierbohrers (14) und dessen Außenumfang erstreckt und dessen Flächennormale sich - bezogen auf den Zentrierbohrer - radial nach auswärts erstreckt, wobei der Nutengrund insbesondere weniger als einen halben Radius des Zentrierbohrers von dessen Achse beabstandet ist.

10. Bohrwerkzeug nach einem der vorhergehenden Ansprüche, **dadurch gekennzeichnet, dass** der Stift (24) als Rundstift ausgebildet ist, der ein Längen-/Durchmesserverhältnis zwischen 0,5 und 2,0 aufweist, insbesondere zwischen 0,75 und 1,5 und besonders bevorzugt etwa von 1,0 und in eine Nut (22) des Zentrierbohrers (14) eingreift und dass die Nut in insbesondere halbkreisförmigen Ausrundungen ausläuft.

11. Bohrwerkzeug nach einem der vorhergehenden Ansprüche, **dadurch gekennzeichnet, dass** der Stift (24) in eine Nut (22) des Zentrierbohrers (14) hineinragt, insbesondere über eine Erstreckung zwischen 0,35 und 0,95 der Tiefe der Nut und besonders bevorzugt über mehr als 60 % der Tiefe der Nut.

12. Bohrwerkzeug nach einem der vorhergehenden Ansprüche, **dadurch gekennzeichnet, dass** die kreisringförmige Absatzfläche (58) des Befestigungskörpers (26) zum Stift (24) hin in montiertem Zustand von dem Zentrierbohrer (14) radial um mehr als 50 µm, insbesondere über mehr als 0,2 mm, beabstandet ist.

13. Bohrwerkzeug nach einem der vorhergehenden Ansprüche, **dadurch gekennzeichnet, dass** im Schaft (18) oder Übergangsbereich des Bohrwerkzeugs (10) eine Durchtrittsausnehmung (50) ausgebildet ist, die den Befestigungskörper (26) aufnimmt und in eingestecktem Zustand des Zentrierbohrers (14) mit dessen Nut (22) fluchtet, wobei die Durchtrittsausnehmung insbesondere ein Innengewinde (54) aufweist.

14. Bohrwerkzeug nach einem der vorhergehenden Ansprüche, **dadurch gekennzeichnet, dass** die Anlage der Anlagefläche des Befestigungskörpers (26) an der Gegenanlagefläche (52) in dem Bohrwerkzeug (10) einen Anschlag für die Eindrigtiefe des Stiftes (24) in die Nut (22) des Zentrierbohrers (14) bildet.

## Claims

1. A drilling tool (10), comprising a large drill (12), in particular a core drill, in which a center drill (14) is guided in an axially movable manner, the axial movement of the center drill (14) relative to the drill (12) being limited by at least one stop, wherein at least one pin (24), which is mounted on the large drill (12), its shank (38) or a transition (40) therebetween extends towards the center drill (14), in the axial direction of the the pin (24), the pin (24) being formed on a fastening body (26) in an inward projecting manner in the radial direction of the drilling tool (10), **characterized in that** the fastening body (26) has a bearing surface (46) which bears against a counter-bearing surface (62) of the drilling tool (10) and which in particular at least partially comprises a greater transversal extent than the pin (24), and
the bearing surface (46) is formed as a cone surface which self-lockingly extends towards the pin (24) in a cone angle which is less than 15 degrees and greater than 0.5 degrees and in particular is 2 to 8 degrees.

2. The drilling tool according to claim 1, **characterized in that** the pin (24) is mounted in the large drill (12), its shank (18) or a transition therebetween and projecting into a recess, in particular a groove (22), of the center drill (14) for the rotary driving thereof.

3. The drilling tool according to one of the preceding claims, **characterized in that** both the pin (24) and the bearing surface (46) are circular and the bearing surface merges into the pin and the transverse extension forming the diameter of the bearing surface.

4. The drilling tool according to one of the preceding claims, **characterized in that** the transition between the pin (24) and the bearing surface (46) is formed on a shoulder, which in particular forms an annular surface (58), the surfaces of which normally facing radially inwards - with respect to the large drill (12).

5. The drilling tool according to one of the preceding claims, **characterized in that** the diameter of the bearing surface (46), at its smallest point, is at least one and a half times as large as the diameter of the pin (24), in particular less than 4 times and particularly preferably about twice as large.

6. The drilling tool according to one of the preceding claims, **characterized in that** the fastening body (26) has an external thread (46) which is arranged on the side of the bearing surface opposite the pin (24) and has a diameter which is equal to or in particular larger than the diameter of the bearing surface and engages in an internal thread (54) of the drilling tool (10).

7. The drilling tool according to one of the preceding claims, **characterized in that** the fastening body (26) is sequentially formed of the pin - bearing surface - thread with increasing diameter, the axial length of thread and bearing surface (46) being substantially equal and in particular 20% to 100%, preferably about 50%, greater than the axial length of the pin.

8. The drilling tool according to one of the preceding claims, **characterized in that** a groove (22) is formed in the center drill (14) of the drilling tool (10), which groove substantially extends axially parallel and in particular ends in a semicircular shape, respectively, and that a rotary driving face is formed on one groove flank.

9. The drilling tool according to claims 8, **characterized in that** the groove (22) comprises a flat groove base, which groove (22) extends in the region between the axis (44) of the center drill (14) and the outer circumference thereof and the surface normal- of which extends radially outwards relative to the center drill wherein the groove base in particular is spaced apart from the axis of the center drill by less than half a radius thereof.

10. The drilling tool according to one of the preceding claims, **characterized in that** the pin (24) is formed as a round pin which has a length/diameter ratio between 0.5 and 2.0, in particular between 0.75 and 1.5 and particularly preferably about 1.0, and engages in a groove (22) of the center drill (14), and **in that** the groove tapers off in particular into semicircular fillets.

11. The drilling tool according to one of the preceding claims, **characterized in that** the pin (24) projects into a groove (22) of the center drill (14), in particular across an extent between 0.35 and 0.95 of the depth of the groove and particularly preferably across more than 60% of the depth of the groove.

12. The drilling tool according to one of the preceding claims, **characterized in that** the annular shoulder surface (58) of the fastening body (26), in the mounted state, is radially spaced apart from the center drill (14) towards the pin (24) by more than 50 µm, in particular by more than 0.2 mm.

13. The drilling tool according to one of the preceding claims, **characterized in that** a passage recess (50) is formed in the shank (18) or transition region of the drilling tool (10), which passage recess receives the fastening body (26) and, in the inserted state of the center drill (14) is aligned with the groove (22) thereof, the passage recess in particular having an internal thread (54).

14. The drilling tool according to one of the preceding claims, **characterized in that** the bearing surface of the fastening body (26) bearing against the counter-bearing surface (52) in the drilling tool (10) forms a stop of the pin (24) penetration depth into the groove (22) of the center drill (14).

## Revendications

1. Outil de forage (10) avec un grand foret (12), en particulier un foret à couronne, dans lequel un foret de centrage (14) est guidé axialement de manière mobile, où le mouvement axial du foret de centrage (14) par rapport au grand foret (12) est limité par au moins une butée, au moins une broche (24), qui est montée sur le grand foret (12), sa tige (38) ou une transition (40) entre ces deux, s'étend dans la direction axiale de la broche (24) vers le foret de centrage (14), où la broche (24) est formée sur un corps de fixation (26) faisant saillie vers l'intérieur à partir de celui-ci dans la direction radiale de l'outil de forage (10), **caractérisé en ce que** le corps de fixation (28) présente une surface de contact (46), qui se repose contre une surface de contact conjuguée (52) de l'outil de forage (10) et qui, en particulier, présente au moins partiellement une extension transversale plus importante que la tige (24), et la surface de contact (46) est conçue comme une surface conique qui s'étend de manière autobloquante avec un angle de cône vers la tige (24) inférieur à 15 degrés et supérieur à 0,5 degré et, en particulier, de 2 à 8 degrés.

2. Outil de forage selon la revendication 1, **caractérisé en ce que** la broche (24) est fixée dans le grand foret (12), sa tige (18) ou une transition entre ces deux et fait saillie dans un évidement, en particulier une rainure (22), du foret de centrage (14) pour l'entrainement en rotation de celui-ci.

3. Outil de forage selon l'une des revendications précédentes, **caractérisé en ce que** la tige (24) et la surface de contact (46) sont toutes deux de forme circulaire et la surface de contact se fond dans la tige et l'extension transversale forme le diamètre de la surface de contact.

4. Outil de forage selon l'une des revendications précédentes, **caractérisé en ce que** la transition entre la tige (24) et la surface de contact (46) est formée sur un épaulement, qui forme en particulier une surface annulaire (58), dont la surface normale - par rapport au grand foret (12) - est dirigée radialement vers l'intérieur.

5. Outil de forage selon l'une des revendications précédentes, **caractérisé en ce que** le diamètre de la surface de contact (46) à son point le plus petit est au moins une fois et demie supérieure au diamètre de la tige (24), en particulier moins de 4 fois et de préférence environ deux fois supérieure.

6. Outil de forage selon l'une des revendications précédentes, **caractérisé en ce que** le corps de fixation (26) présente un filetage extérieur (46) qui est disposé sur le côté de la surface d'appui opposé à la broche (24) et qui présente un diamètre identique ou en particulier supérieur à la surface d'appui et qui s'engage dans un filetage intérieur (54) de l'outil de forage (10).

7. Outil de forage selon l'une des revendications précédentes, **caractérisé en ce que** le corps de fixation (26) est formé de la séquence broche - surface de contact - filetage de diamètre croissant, où la longueur axiale du filet et de la surface de contact (46) est sensiblement égale et en particulier de 20 % à 100 %, de préférence environ 50 %, supérieure à la longueur axiale de la broche.

8. Outil de forage selon l'une des revendications précédentes, **caractérisé en ce qu'**une rainure (22) est formée dans le foret central (14) de l'outil de forage (10), qui s'étend sensiblement parallèlement à l'axe et se termine en particulier chacune en demi-cercle, et **en ce qu'**une surface d'entraînement en rotation est formée sur un flanc de la rainure.

9. Outil de forage selon la revendication 8, **caractérisé en ce que** la rainure (22) s'étend dans la zone entre l'axe (44) du foret central (14) et la circonférence extérieure de celui-ci et présente un fond de rainure plat. et dont la normale à la surface s'étend radialement vers l'extérieur par rapport au foret central, où le fond de rainure est en particulier espacé à moins d'un demi-rayon du foret centra! de son axe.

10. Outil de forage selon l'une des revendications précédentes, **caractérisé en ce que** la tige (24) est conçue comme une tige ronde qui présente un rapport longueur/diamètre compris entre 0,5 et 2,0, en particulier entre 0,75 et 1,5 et de manière particulièrement préférée environ de 1,0, et qui s'engage dans une rainure (22) du foret central (14), et **en ce que** la rainure se rétrécit en particulier en filets semi-circulaires.

11. Outil de forage selon l'une des revendications précédentes, **caractérisé en ce que** la tige (24) fait saillie dans une rainure (22) du foret central (14), en particulier sur une extension comprise entre 0,35 et 0,95 de la profondeur de la rainure et, de manière particulièrement préférée, sur plus de 60% de la profondeur de la rainure.

12. Outil de forage selon l'une des revendications précédentes, **caractérisé en ce que** la surface d'épaulement annulaire (58) du corps de fixation (26) en direction de l'axe (24) est espacée radialement du foret central (14) de plus de 50 µm, en particulier de plus de 0,2 mm, à l'état monté.

13. Outil de forage selon l'une des revendications précédentes, **caractérisé en ce que** dans la tige (18) ou la zone de transition de l'outil de forage (10) est formé un évidement traversant (50) qui reçoit le corps de fixation (26) et qui, lorsque le foret de centrage (14) est à l'état inséré, est aligné avec sa rainure (22), où l'évidement traversant présente en particulier un filetage intérieur (54).

14. Outil de forage selon l'une des revendications précédentes, **caractérisé en ce que** l'appui de la surface de butée du corps de fixation (26) contre la surface de contrebutée (52) dans l'outil de forage (10) forme une butée pour la profondeur de pénétration de la tige (24) dans la rainure (22) du foret de centrage (14).
